# EUROPÄISCHE PATENTSCHRIFT

(11) **EP 1 448 414 B1**
(45) Veröffentlichungstag und Bekanntmachung des Hinweises auf die Patenterteilung: **30.08.2006**
(21) Anmeldenummer: 02782716.1
(22) Anmeldetag: 14.10.2002
(51) Int. Cl.: B60S 1/32, B60S 1/38

(54) **WISCHBLATT**
WIPER BLADE
BALAI D'ESSUIE-GLACE

(30) Priorität: 21.11.2001 DE 10157130
(43) Veröffentlichungstag der Anmeldung: 25.08.2004
(73) Patentinhaber: ROBERT BOSCH GMBH, 70442 Stuttgart (DE)
(72) Erfinder: MAYER, Stephan, 76137 Karlsruhe (DE)
(86) Internationale Anmeldenummer: PCT/DE2002/003874
(87) Internationale Veröffentlichungsnummer: WO 2003/045746

(56) Entgegenhaltungen:
- DE-A- 3 829 343
- DE-A- 10 103 889
- DE-A- 19 731 683

## Beschreibung

### Stand der Technik

Die Erfindung geht von einem Wischblatt nach dem Oberbegriff des Anspruchs 1 aus.

Bekannte Scheibenwischer besitzen einen Wischarm, der aus einem Befestigungsteil und einem damit gelenkig verbundenen Gelenkteil mit einer Wischstange aufgebaut ist. Diese kann als besonderes Bauteil mit dem Gelenkteil fest verbunden oder unmittelbar an dem Gelenkteil angeformt sein. Mit der Wischstange ist ein Wischblatt gelenkig verbunden, das ein Wischleistenträger und eine Wischleiste besitzt. In der Regel umfasst der Wischleistenträger ein Tragbügelsystem mit einem Mittelbügel und gegebenenfalls mit untergeordneten Bügeln, z.B. einem Zwischenbügel und/oder Krallenbügeln, die eine Wischleiste halten. Solche Scheibenwischer sind z.B. aus der DE 37 44 237 A1 bekannt.

Aus der DE 197 38 232 A1 ist ferner ein gelenkloses Tragelement aus einem elastischen, hochfesten Kunststoff bekannt, das die Wischleiste hält und im unbelasteten Zustand eine Krümmung aufweist, die so ausgelegt ist, dass sich ein gleichmäßiger Anpressdruck ergibt, wenn sich im Betrieb des Wischblatts die Wischleiste vollständig an die Fahrzeugscheibe anlegt. An den Stirnseiten werden als Abschluss des Profils Kappen aus Kunststoff montiert. Es sind ferner ähnliche Wischblätter mit einem Tragelement aus Federstahl bekannt. Im Folgenden wird unter Wischleistenträger sowohl ein Tragbügelsystem als auch ein Tragelement im oben beschriebenen Sinn verstanden.

Da ein Wischblatt ein schlankes Bauteil ist und auf Grund großer Geschwindigkeitsunterschiede zwischen dem antriebsseitigen, inneren Bereich und dem äußeren Bereich des Wischblatts unterschiedliche Reibverhältnisse vorliegen sowie bei geringen Geschwindigkeiten und großer Reibung Stick-Slipeffekte auftreten, wird das Wischblatt zum Schwingen angeregt. Dadurch können insbesondere am Innenkreis des Wischblatts, wo besonders kleine Reibgeschwindigkeiten vorherrschen, unerwünschte seitliche Bewegungen auftreten, die ab einer bestimmten Größe dazu führen können, dass das Wischblatt am Wischarm anschlägt und Klappergeräusche verursacht. Dies ist besonders kritisch, wenn die Fahrzeugscheiben trocken, verschmutzt, vereist oder nicht ausreichend feucht sind oder Schnee auf der Fahrzeugscheibe liegt. Durch das Rattern verliert das Wischblatt kurzfristig den Kontakt zur Fahrzeugscheibe, wobei außerdem Feuchtigkeit und Schmutz vom Wischblatt auf die Windschutzscheibe geschleudert wird, so dass das Wischbild unbefriedigend ist. Das Wischblatt neigt umso eher zum Rattern, je mehr Bügelteile es aufweist. Ferner verhalten sich leichte Wischblätter mit einer geringen Federsteifigkeit ungünstiger als andere. Vor allem bei relativ langen Wischblättern, insbesondere mit Längen über 550 Millimeter, ist die Führung am Gelenk zwischen dem Wischblatt und dem Wischarm nicht ausreichend stabil, um diese Schwingungen zu unterbinden.

Aus der DE 197 31 683 A1 ist ferner eine Einrichtung zum Führen des Wischblatts bekannt, die ein erstes und ein zweites Teil aufweist. Sie ist im Bereich der Anlenkstelle eines Krallenbügels, und zwar des Krallenbügels, der nahe dem Innenkreis des Wischblatts liegt, angeordnet und mit dem Gelenkteil des Wischarms fest verbunden, z.B. durch Kleben, Schweißen, Löten, Klipsen, Klemmen usw. Das erste Teil der Einrichtung besitzt Führungswangen, welche die Gelenkstelle des Krallenbügels umgreifen und in Bezug auf den Wischarm führen. Auch das zweite Teil weist Führungswangen auf, zwischen denen das erste Teil teleskopartig geführt ist, so dass dessen Führungswangen kurz gehalten werden können und eine Kollision mit der Fahrzeugscheibe auch bei starken Wölbungen der Fahrzeugscheibe nicht zu befürchten ist. Das erste Teil ist zweckmäßigerweise verliersicher mit der Einrichtung verbunden, z.B. durch ein nachgiebiges Element.

Das zweite Teil kann auch aus einer Federzunge bestehen, die das erste Teil mit der Einrichtung in der Weise verbindet, dass das erste Teil in Bewegungsrichtung des Scheibenwischers starr geführt ist, während es senkrecht zur Fahrzeugscheibe gegenüber dem Wischarm nachgeben kann. Es ist natürlich auch möglich, als zweites Teil eine Kombination zwischen einer Federzunge und Führungswangen zu wählen, wobei die Federzunge dann die Funktion des nachgiebigen Elements übernimmt. Ferner kann die Einrichtung aus einzelnen Blechteilen hergestellt und zusammengesetzt sein, bevorzugt ist sie jedoch ein Kunststoffspritzteil aus einem geeigneten Kunststoff. In jedem Fall werden aber zum Führen des Wischblatts zusätzliche Bauteile benötigt, wodurch ein erhöhter Fertigungs- und Montageaufwand und zusätzliche Materialkosten entstehen. Zwischen den Führungsflächen der Einrichtung sind Luftspalte erforderlich, um zu verhindern, dass das Gelenk zwischen Wischblatt und Wischarm durch toleranzbehaftete Wischarmgeometrien, z.B. Kröpfungen der Wischstange, nicht klemmt. Auch hierbei können Klappergeräusche entstehen, weil das seitliche Schwingen zwar vermindert, aber der seitliche Anlagewechsel beim Wischvorgang nicht vermieden wird. Auch ist das Einfädeln des Wischblatts in die Führung der Einrichtung aufwändig, wenn das Wischblatt aus einer Abklappstellung in eine Parkstellung auf der Windschutzscheibe zurückgeführt wird. Eine Fehlfunktion bzw. ein Ausfall ist hierbei nicht auszuschließen.

### Vorteile der Erfindung

Nach der Erfindung ist an beiden Enden des Lenkers ein Schwenklager angeordnet, von denen eines eine Bewegung in Längsrichtung des Lagerarms bzw. des Wischblatts zuläßt. Die Schwenklager an den Enden des Lenkers kontrollieren die relative Hubbewegung des Wischblatts zum Wischarm, so dass trotz großer Hubbewegungen nie die Gefahr besteht, dass Teile der Einrichtung mit der Windschutzscheibe in Kontakt kommen. Dadurch ist die Einrichtung insbesondere für flachbauende Designlenkarme geeignet, bei denen sie verdeckt im Profil des Wischarms eingesetzt werden kann. Da die Einrichtung am Wischblattende an der Wischblattleiste nahe der Windschutzscheibe angreift, ist die Tendenz zum Verkannten der Führung gering.

Um eine Bewegung eines der Schwenklager in Längsrichtung des Wischarms bzw. des Wischblatts zuzulassen, besitzt ein Schwenklager in der genannten Richtung eine Längsführung, die in der Regel nicht zum seitlichen Führen des Wischblatts dient, sondern nur zur Kontrolle der Hubbewegung. Außerdem verhindert sie, dass die Teile der Einrichtung in einer Abklappstellung des Wischarms außer Eingriff geraten und beim Zurückstellen wieder eingefädelt werden müssen. Zum seitlichen Führen des Wischblatts dienen Führungsflächen an den Lenkern, die mit entsprechenden Führungsflächen an einem Klipp zusammenwirken der auf dem Wischblatt sitzt. Der Klipp wird zweckmäßigerweise als Endkappe ausgebildet und ist ein Spritzgussteil aus Kunststoff. Er wird am Ende oder in einen Bereich zwischen diesem und einem Anlenkpunkt des Wischblatts am Wischarm auf die Wischleiste bzw. eines gelenklosen Wischleistenträgers gesteckt. Die Führungsflächen werden zwischen den Schwenklagern angeordnet, um eine kompakte Bauweise zu erreichen.

Gemäß einem Ausführungsbeispiel der Erfindung bildet mindestens ein mit dem Lenker fest verbundener Fangzapfen das Schwenklager auf der Seite des Wischblatts. Er ist in dem Klipp des Wischblatts in einer Fangnut gelagert, die in Längsrichtung des Wischblatts verläuft. Der Fangzapfen hat in der Fangnut einen ausreichenden Bewegungsspielraum, so dass durch das Schwenklager die Auflagekräfte des Wischblatts nicht beeinflusst werden. Der Fangzapfen wird in der Fangnut mittels eines Rasthakens gehalten, der beim Einfädeln des Fangzapfens in die Fangnut elastisch nachgibt und anschließend das offene Ende der Fangnut sperrt.

Da nur ein Schwenklager eine Längsführung aufzuweisen braucht, wird das Schwenklager auf der Seite des Wischarms zweckmäßigerweise von einer Drehachse gebildet, die in Lagerbohrungen oder Vertiefungen des Gelenkteils oder in einem mit diesem verbundenen Adapter gelagert und durch seitliche Anlaufflächen geführt ist. Die Drehachse bzw. der Adapter werden in den Innenraum des in der Regel u-förmigen, zur Windschutzscheibe hin offenen Profils des Gelenkteils bzw. der Wischstange eingesetzt. Dabei kann die Elastizität der Seitenwangen des Profils auf die Elastizität der Schwenkachse so abgestimmt werden, dass diese in die Vertiefungen bzw. in die Lagerbohrungen des Gelenkteils einrastet.

Die Drehachse kann auch mittelbar über einen Adapter im Gelenkteil oder in der daran angeformten Wischstange gelagert sein. Der Adapter besteht im Wesentlichen aus zwei Adapterstücken, die gegenüberliegend und verdeckt im u-förmigen Profil des Gelenkteils befestigt sind und jeweils eine Lagerbohrung für die Schwenkachse aufweisen, die über eine Keilnut zur Windschutzscheibe hin offen ist, so dass die Schwenkachse durch die Keilnut in die Lagerbohrung eingerastet werden kann. Die Adapterstücke können je nach Ausgestaltung und Werkstoff mit dem Gelenkteil verklebt, verschweißt oder verlötet werden. Gemäß einer Ausgestaltung sind die einander gegenüberliegenden Adapterstücke durch Federelemente miteinander verbunden und weisen an ihren Außenseiten Zapfen auf, die in entsprechende Ausnehmungen bzw. Vertiefungen des Gelenkteils einrasten. Dadurch kann die Einrichtung zur Führung des Wischblatts ohne großen Aufwand leicht und sicher montiert werden.

Die Einrichtung kann zwei parallel verlaufende Lenker besitzen, die an ihren einander zugewandten Seiten Führungsflächen aufweisen, die an den seitlichen Führungsflächen des Klipps anliegen. Der Fangzapfen, der auf der Seite des Klipps das Schwenklager bildet, ist mit den Lenkern verbunden. Er kann in der Mitte geteilt oder zur Abstützung der Lenker auch durchgehend ausgebildet sein. Ferner kann die Einrichtung durch ein Verbindungsstück im Bereich des anderen Schwenklagers versteift sein. Dadurch kann die seitliche Nachgiebigkeit der Lenker in Wischrichtung modifiziert werden, um die seitliche Führung des Wischblatts auf die einzuhaltenden Fertigungstoleranzen abzustimmen.

Gemäß einer Ausgestaltung der Erfindung besitzt die Einrichtung zum Führen des Wischblatts nur einen Lenker, der in den Schwenklagern gelagert ist und in einem längs verlaufenden Führungsschlitz zwischen zwei Seitenwangen des Klipps geführt ist. Der Lenker kann mittig zum Klipp oder seitlich versetzt zur Längsmittelebene angeordnet sein, um einen seitlichen Versatz des Wischblatts zum Wischarm zu ermöglichen. Dieser Zweck kann in vielen Fällen auch durch eine Kröpfung des Lenkers erreicht oder unterstützt werden.

Der Querschnitt des Lenkers hat in einer einfachen Ausführung einen ringförmigen Querschnitt. Er ist dadurch leicht und weist in allen Richtungen ein gleiches Widerstandsmoment gegen Biegung auf. Durch einen von der Kreisform abweichenden Querschnitt lässt sich das Widerstandsmoment in verschiedenen Richtungen unterschiedlich gestalten und an die Einsatzbedingungen anpassen. Hierzu eignen sich ovale oder polygonale Querschnitte. Sie ergeben außerdem günstige Führungsflächen. Diese können ferner durch Abflachungen im Bereich der Führungsflächen modifiziert werden.

Das Spiel zwischen den Führungsflächen am Lenker und den Führungsflächen am Klipp kann sehr klein gewählt werden, da es unabhängig von den Lagerspielen der Schwenklager gewählt werden kann. Um jedoch eine spielfreie Führung zu erreichen, durch die jede Geräuschentwicklung vermieden wird, weist mindestens eine der Führungsflächen Federelemente auf, mit denen sie an der korrespondierenden Führungsfläche anliegt.

Die Einrichtung zum Führen des Wischblatts nach der Erfindung übt auf das Wischblatt keine Kräfte und Momente in Richtung auf die Windschutzscheibe aus, so dass sie die Auflagekraft der Wischleiste nicht beeinflusst. Damit die Wischleiste sich auch um ihre Längsachse drehen kann, ist es zweckmäßig, dass der Fangzapfen in Längsrichtung ballig ausgeführt ist und in einer entsprechenden Führungsnut des Klipps läuft. Dabei kann der Fangzapfen in vorteilhafter Weise als ballige Rolle ausgebildet sein, der auf Lagerzapfen an den Lenkern gelagert ist. Das Spiel zwischen dem balligen Fangzapfen und der entsprechenden Führungsnut wird so gewählt, dass dadurch gleichzeitig die seitlichen Führungskräfte von den Lenkern auf den Klipp übertragen werden können.

### Zeichnung

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine schematische Seitenansicht eines Wischarms mit einem gelenkig verbunden Wischblatt,
- Fig. 2: in perspektivischer Darstellung ein Detail einer Einrichtung mit zwei Lenkern entsprechend der Linie II in Fig. 1,
- Fig. 3: eine Befestigung einer Einrichtung nach Fig. 2 mittels eines Adapters,
- Fig. 4: eine perspektivische Darstellung einer Variante des Adapters nach Fig. 3 eines Gelenkteils mit einem Wischblatt von unten,
- Fig. 5: einen balligen Fangzapfen als Variante zu Fig. 2,
- Fig. 6: eine Variante mit einem Lenker nach Fig. 2,
- Fig. 7: einen schematischen Querschnitt entsprechend der Linie VII-VII in Fig. 6,
- Fig. 8: eine Variante zu Fig. 7,
- Fig. 9: eine Teilansicht eines Lenkers mit Federelementen entsprechend dem Pfeil IX in Fig. 7 und
- Fig. 10: eine Seitenansicht des Lenkers entsprechend dem Pfeil X in Fig. 9.

### Beschreibung der Ausführungsbeispiele

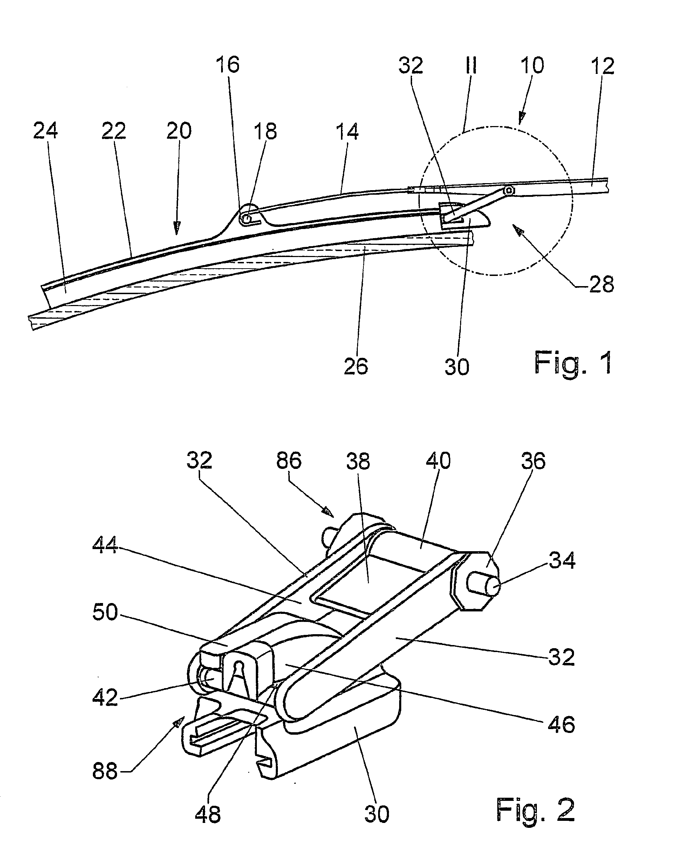

Von einem Wischarm 10 ist in Fig. 1 ein Gelenkteil 12 und eine Wischstange 14 dargestellt, deren hakenförmiges Ende 16 einen Gelenkbolzen 18 eines Wischblatts 20 umgreift und somit das Wischblatt 20 gelenkig mit dem Wischarm 10 verbindet. Das Wischblatt 20 besitzt einen Wischleistenträger 22, mit einer Wischleiste 24. Diese liegt an einer Windschutzscheibe 26 an.

Zwischen dem Wischblatt 20 und dem Gelenkteil 12 des Wischarms 10 ist eine Einrichtung 28 zum seitlichen Führen des Wischblatts 20 mit zwei parallel angeordneten Lenkern 32 vorgesehen (Fig. 2). Die Lenker 32 sind an ihren Enden in Schwenklagern 86 und 88 schwenkbar gelagert. Das Schwenklager 86 auf der Seite des Wischarms 10 besitzt eine Drehachse 34, die mit den Lenkern 32 fest verbunden und aus zwei seitlichen Zapfen bestehen kann. Die Drehachse 34 kann auch einteilig durch ein Nabenteil 40 der Einrichtung 28 verlaufen. Sie ist entweder mit den Lenkern 32 und dem Nabenteil 40 fest verbunden und im Wischarm 10 schwenkbar gelagert oder mit dem Wischarm 10 fest verbunden. In diesem Fall sind die Lenker 32 mit dem Nabenteil 40 auf der Drehachse 34 drehbar gelagert.

Die Drehachse 34 wird in ein zur Windschutzscheibe 26 hin offenes u-förmiges Profil des Wischarms 10 eingesetzt, in dem sie in entsprechende Vertiefungen bzw. Ausnehmungen des u-förmigen Profils des Wischarms 10 oder eines Adapters 62 einrastet, der mit dem Wischarm 10 verbunden ist. Zur seitlichen Führung der Einrichtung 28 im Wischarm 10 sind im Bereich der Drehachse 34 seitliche Anlaufflächen 36 vorgesehen, die mit entsprechenden, nicht dargestellten Anlaufflächen am Wischarm 10 zusammenwirken. An den Nabenteil 40 schließt sich in Längsrichtung der Lenker 32 ein Verbindungsstück 38 an, das mehr oder weniger lang ausgebildet sein kann und die Lenker 32 gegenseitig abstützt. Dadurch kann die seitliche Nachgiebigkeit der Einrichtung modifiziert werden.

Das Schwenklager 88 am anderen Ende der Lenker 32 wird von einem Fangzapfen 42 gebildet, der die beiden Lenker 32 miteinander verbindet oder der in der Mitte geteilt sein kann. Der Fangzapfen 42 ist in einer Fangnut 48 eines Klipps 30 geführt, der als Endkappe ausgebildet ist. Die Endkappe 30 ist auf das dem Wischarm 10 zugewandte Ende der Wischleiste 24 bzw. des Wischleistenträgers 22 aufgesteckt, wobei die Fangnut 48 in Längsrichtung der Wischleiste 24 verläuft. Durch den Fangzapfen 42 sind die Lenker 32 in der Fangnut 48 schwenkbar gelagert, außerdem kann sich der Fangzapfen 42 innerhalb der Fangnut 48 in Längsrichtung der Wischleiste 24 frei bewegen, so dass bei einer Schwenkbewegung der Lenker 32 um die Drehachse 34 ein Längenausgleich stattfindet. Damit der Fangzapfen 42 in einer Abklappposition des Wischarms 10 nicht unbeabsichtigt aus der Fangnut 48 heraus gleitet, ist ein Rasthaken 50 vorgesehen, der bei der Montage der Einrichtung 28 elastisch nachgibt und anschließend die offene Seite der Fangnut 48 sperrt, so dass der Fangzapfen 42 in der Fangnut 48 verriegelt ist. So sind nach einer fachgerechten Erstmontage Fehlbedienungen und Fehlfunktionen ausgeschlossen.

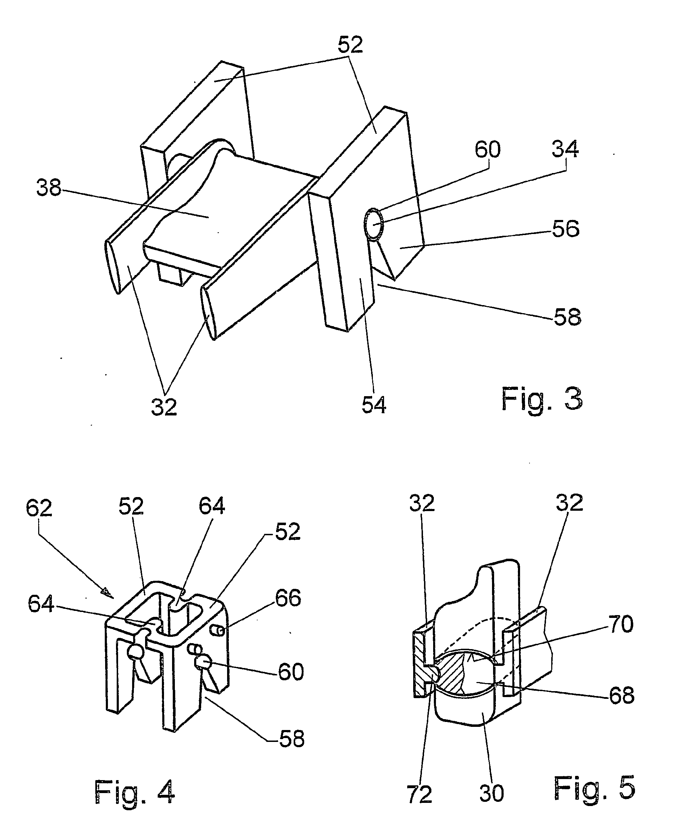

Zur vereinfachten Montage kann es zweckmäßig sein, die Drehachse 34 in einem Adapter 62 zu lagern, die in einer einfachen Ausgestaltung (Fig. 3) aus zwei Adapterstücken 52 besteht. Diese sind an den inneren Seitenwänden des u-förmigen Profils des Wischarms 10 angebracht und besitzen eine Lagerbohrung 60, die über eine Keilnut 58 zur Windschutzscheibe 26 hin oder in Längsrichtung des Wischarms 10 offen ist. Die Drehachse 34 wird durch die Keilnut 58 in die Lagerbohrung 60 eingerastet, indem die zu beiden Seiten der Keilnut 58 befindlichen Schenkel 54 und 56 des Adapterstücks 52 elastisch nachgeben.

Bei der Ausführung des Adapters 62 nach Fig. 4 sind die Adapterstücke 52 durch Federelemente 64 miteinander verbunden, die quer zu den Seitenwänden des u-förmigen Profils des Wischarms 10 wirken. An den äußeren Seiten der Adapterstücke 52 sind Zapfen 66 vorgesehen, die bei der Montage in entsprechende Ausnehmungen bzw. Vertiefungen des Wischarms 10 einrasten, indem die Federelemente 64 nachgeben.

Um eine größere Schwenkbewegung des Wischblatts 20 um seine Längsachse zuzulassen, ist es zweckmäßig, den Fangzapfen 68 in Richtung seiner Drehachse ballig auszuführen und in einer entsprechenden Führungsnut 70 zu lagern. Dadurch kann die Endkappe 30 und damit das Wischblatt 20 um ihre Längsachse schwenken. Der Fangzapfen 68 kann auch als ballige Rolle ausgeführt sein, die auf Lagerzapfen 72 an den Lenkern 32 gelagert ist (Fig. 5).

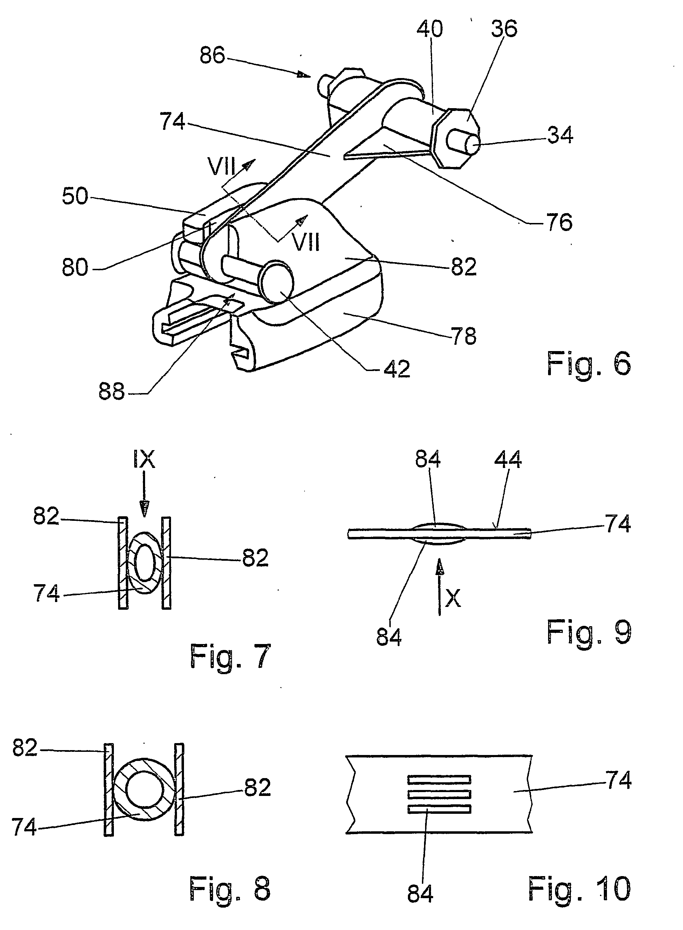

Die Variante nach Fig. 6 zeigt eine Einrichtung 28 mit einem einzigen Lenker 74, der an dem Nabenteil 40 mittels Stützwinkel 76 angeschlossen ist. An seinem anderen Ende ist er in einem Führungsschlitz 80 zwischen zwei Seitenwangen 82 des als Endkappe 78 ausgebildeten Klipps geführt. Der Führungsschlitz 80 (Fig. 6) sowie die Führungsflächen 44, 46 (Fig. 2) sind zwischen den Schwenklagern 86 und 88 angeordnet, so dass bei einer Relativbewegung zwischen dem Wischblatt 20 und dem Wischarm 10 keine Teile der Einrichtung 28 mit der Windschutzscheibe 26 in Kontakt kommen.

Die Querschnittkontur der Lenker 32, 74 ist bei einer Ausführung nach Fig. 8 ringförmig. In diesem Fall ist das Widerstandsmoment gegenüber Biegung in allen Richtungen gleich. Um das Widerstandsmoment den jeweiligen Einbaubedingungen besser anzupassen, kann es zweckmäßig sein, dass die Querschnittkonturen der Lenker 32, 74 gemäß einer Ausgestaltung nach Fig. 7 eine von der Kreisform abweichende Querschnittkontur aufweisen, z.B. oval oder polygonal. Dadurch können zusätzlich die Eigenschaften der Führungsflächen 44 und der Kontaktflächen in dem Führungsschlitz 80 verändert werden.

Das Spiel zwischen den Führungsflächen 44 an den Lenkern 32 und den Führungsflächen 46 an der Endkappe 30 sowie zwischen dem Lenker 74 und den Seitenwänden des Führungsschlitzes 80 (Fig. 6) kann sehr eng gewählt werden, ohne die Funktion der Einrichtung 28 zu beeinträchtigen. Um eine spielfreie Führung zu verwirklichen, ist es zweckmäßig, an einer der Flächen 44, 46, 80 oder an den Seitenflächen des Lenkers 74 Federelemente 84 vorzusehen, die sich an den korrespondierenden Flächen abstützen. Durch die Federelemente 84 wird sichergestellt, dass sich auch bei Verschleiß der Führungsflächen 44, 46, 80 kein Spiel einstellt.

### Bezugszeichen

- 10: Wischarm
- 12: Gelenkteil
- 14: Wischstange
- 16: hakenförmiges Ende
- 18: Gelenkbolzen
- 20: Wischblatt
- 22: Wischleistenträger
- 24: Wischleiste
- 26: Windschutzscheibe
- 28: Einrichtung
- 30: Endkappe
- 32: Lenker
- 34: Drehachse
- 36: seitliche Anlauffläche
- 38: Verbindungsstück
- 40: Nabenteil
- 42: Fangzapfen
- 44: Führungsfläche
- 46: Führungsfläche
- 48: Fangnut
- 50: Rasthaken
- 52: Adapterstück
- 54: Schenkel
- 56: Schenkel
- 58: Keilnut
- 60: Lagerbohrung
- 62: Adapter
- 64: Federelement
- 66: Zapfen
- 68: Fangzapfen
- 70: Führungsnut
- 72: Lagerzapfen
- 74: Lenker
- 76: Stützwinkel
- 78: Endkappe
- 80: Führungsschlitz
- 82: Seitenwange
- 84: Federelement
- 86: Schwenklager
- 88: Schwenklager

## Patentansprüche

1. Wischblatt (20), das einen Wischleistenträger (22) und eine Wischleiste (24) umfasst und durch eine Einrichtung (28) mit einem Lenker (32, 74) gegenüber einem Wischarm (10) seitlich führbar ist, wobei ein Ende des Lenkers (32, 74) an einem Gelenkteil (12) des Wischarms (10) etwa senkrecht zu einer Windschutzscheibe (26) schwenkbar fixierbar ist und der Lenker (32, 74) mit seitlichen Führungsflächen an einem Teil des Wischblatts (20) anliegt, **dadurch gekennzeichnet, dass** an beiden Enden des Lenkers (32, 74) ein Schwenklager (86, 88) angeordnet ist, von denen eines eine Bewegung in Längsrichtung des Wischarms (10) bzw. des Wischblatts (20) zulässt.

2. Wischblatt nach Anspruch 1, **dadurch gekennzeichnet, dass** mindestens ein mit dem Lenker (32, 74) fest verbundener Fangzapfen (42) das Schwenklager (88) auf der Seite des Wischblatts (20) bildet, wobei der Fangzapfen (42) in einem Klipp (30, 78), der auf dem Wischblatt (20) sitzt, in einer Fangnut (48) gelagert ist, die in Längsrichtung des Wischblatts (20) verläuft.

3. Wischblatt nach Anspruch 2, **dadurch gekennzeichnet, dass** der Klipp (30, 78) als Endkappe ausgebildet ist.

4. Wischblatt nach einem der Ansprüche 2 oder 3, **dadurch gekennzeichnet, dass** ein federnder Rasthaken (50) den Fangzapfen (42) in der zu einem Gelenkbolzen (18) hin offenen Fangnut (48) hält.

5. Wischblatt nach einem der vorhergehenden Ansprüche, **dadurch gekennzeichnet, dass** das Schwenklager (86) auf der Seite des Wischarms (10) von einer Drehachse (34) gebildet ist, die in Lagerbohrungen oder Vertiefungen des Gelenkteils (12) oder in einem mit diesem verbundenen Adapter (52, 62) gelagert und durch seitliche Anlaufflächen (36) geführt ist.

6. Wischblatt nach einem der Ansprüche 1 bis 4, **dadurch gekennzeichnet, dass** das Schwenklager (86) auf der Seite des Wischarms (10) von einer mit dem Wischarm (10) fest verbundenen Drehachse (34) gebildet ist, auf der ein Nabenteil (40) drehbar gelagert ist, das mit dem Lenker (32, 74) fest verbunden und durch seitliche Anlaufflächen (36) geführt ist.

7. Wischblatt nach einem der Ansprüche 5 bis 6, **dadurch gekennzeichnet, dass** der Adapter (62) aus zwei einander gegenüber liegenden Adapterstücken (52) besteht, die an den Innenflächen der Seitenwangen des Gelenkteils (12) befestigt sind und jeweils eine zur Windschutzscheibe (26) hin offene Keilnut (58) mit einer am Ende angeordneten Lagerbohrung (60) aufweisen, in die die Drehachse (34) eingeklippst ist (Fig. 3).

8. Wischblatt nach Anspruch 7, **dadurch gekennzeichnet, dass** die Adapterstücke (52) durch Federelemente (64) verbunden sind und an ihren Außenseiten Zapfen (66) aufweisen, die in entsprechende Ausnehmungen bzw. Vertiefungen des Gelenkteils einrasten.

9. Wischblatt nach einem der vorhergehenden Ansprüche, **dadurch gekennzeichnet, dass** die Führungsflächen (44, 46) an dem Lenker (32, 74) bzw. an dem Klipp (30, 78) zwischen den Schwenklagern (86, 88) angeordnet sind.

10. Wischblatt nach einem der Ansprüche 2 bis 9, **dadurch gekennzeichnet, dass** zwei parallel verlaufende Lenker (32) vorgesehen sind, die an ihren einander zugewandten Seiten Führungsflächen (44) aufweisen, die an den seitlichen Führungsflächen (46) des Klipps (30) anliegen (Fig. 2).

11. Wischblatt nach einem der Ansprüche 2 bis 9, **dadurch gekennzeichnet, dass** ein Lenker (32) vorgesehen ist, der in einem Führungsschlitz (80) des Klipps (78) geführt ist.

12. Wischblatt nach einem der Ansprüche 2 bis 11, **dadurch gekennzeichnet, dass** die Lenker (32, 74) über ein Verbindungsstück (38) bzw. Stützwinkel (76) gegenseitig oder an dem Nabenteil (40) bzw. der Drehachse (34) abgestützt sind.

13. Wischblatt nach einem der vorhergehenden Ansprüche, **dadurch gekennzeichnet, dass** der Lenker (32, 74) ein ringförmiges Querschnittprofil hat.

14. Wischblatt nach einem der vorhergehenden Ansprüche, **dadurch gekennzeichnet, dass** der Lenker (32, 74) eine von der Kreisform abweichende Querschnittkontur aufweist.

15. Wischblatt nach einem der vorhergehenden Ansprüche, **dadurch gekennzeichnet, dass** die Führungsflächen (44) am Lenker (32, 74) oder die Führungsflächen (46, 80) an dem Klipp (30, 78) Federelemente aufweisen, mit denen sie an den jeweilig anderen Führungsflächen (44, 46, 80) anliegen (Fig. 9 und 10).

16. Wischblatt nach einem der vorhergehenden Ansprüche, **dadurch gekennzeichnet, dass** der Fangzapfen (68) in Längsrichtung ballig ausgeführt ist und in einer entsprechenden Führungsnut (70) des Klipps (30) läuft (Fig. 5).

17. Wischblatt nach Anspruch 16, **dadurch gekennzeichnet, dass** der Fangzapfen (68) auf Lagerzapfen (72) an den Lenkern (32) gelagert ist.

## Claims

1. Wiper blade (20) which comprises a wiper strip carrier (22) and a wiper strip (24) and can be guided laterally in relation to a wiper arm (10) by a device (28) with a connecting bar (32, 74), one end of the connecting bar (32, 74) being fixable to an articulated part (12) of the wiper arm (10) in a manner such that it can pivot approximately perpendicularly with respect to a windscreen (26), and the connecting bar (32, 74) bearing with lateral guide surfaces against a part of the wiper blade (20), **characterized in that** a pivot bearing (86, 88) is arranged at both ends of the connecting bar (32, 74), of which one pivot bearing permits a movement in the longitudinal direction of the wiper arm (10) or of the wiper blade (20).

2. Wiper blade according to Claim 1, **characterized in that** at least one gripping pin (42) which is connected fixedly to the connecting bar (32, 74) forms the pivot bearing (88) on the side of the wiper blade (20), the gripping pin (42) being mounted in a clip (30, 78), which sits on the wiper blade (20), in a gripping groove (48) which runs in the longitudinal direction of the wiper blade (20).

3. Wiper blade according to Claim 2, **characterized in that** the clip (30, 78) is designed as an end cap.

4. Wiper blade according to either of Claims 2 and 3, **characterized in that** a spring-mounted latching hook (50) holds the gripping pin (42) in the gripping groove (48) which is open towards a hinge pin (18).

5. Wiper blade according to one of the preceding claims, **characterized in that** the pivot bearing (86) is formed on the side of the wiper arm (10) by a rotary spindle (34) which is mounted in bearing bores or depressions of the articulated part (12) or in an adapter (52, 62) connected to the latter, and is guided by lateral stop surfaces (36).

6. Wiper blade according to one of Claims 1 to 4, **characterized in that** the pivot bearing (86) is formed on the side of the wiper arm (10) by a rotary spindle (34) which is connected fixedly to the wiper arm (10) and on which is rotatably mounted a hub part (40) which is connected fixedly to the connecting bar (32, 74) and is guided by lateral stop surfaces (36).

7. Wiper blade according to either of Claims 5 and 6, **characterized in that** the adapter (62) comprises two mutually opposite adapter pieces (52) which are fastened to the inner surfaces of the side cheeks of the articulated part (12) and in each case have a keyway (58), which is open towards the windscreen (26) and has a bearing bore (60) which is arranged at the end and into which the rotary spindle (34) is clipped (Fig. 3).

8. Wiper blade according to Claim 7, **characterized in that** the adapter pieces (52) are connected by spring elements (64) and, on their outer sides, have pins (66) which latch into corresponding recesses or depressions of the articulated part.

9. Wiper blade according to one of the preceding claims, **characterized in that** the guide surfaces (44, 46) are arranged between the pivot bearings (86, 88) on the connecting bar (32, 74) and on the clip (30, 78), respectively.

10. Wiper blade according to one of Claims 2 to 9, **characterized in that** two connecting bars (32) running parallel are provided and, on their mutually facing sides, have guide surfaces (44) which bear against the lateral guide surfaces (46) of the clip (30) (Fig. 2).

11. Wiper blade according to one of Claims 2 to 9, **characterized in that** a connecting bar (32) is provided which is guided in a guide slot (80) of the clip (78).

12. Wiper blade according to one of Claims 2 to 11, **characterized in that** the connecting bars (32, 74) are mutually supported via a connecting piece (38) or support bracket (76) or are supported on the hub part (40) or the rotary spindle (34).

13. Wiper blade according to one of the preceding claims, **characterized in that** the connecting bar (32, 74) has an annular cross-sectional profile.

14. Wiper blade according to one of the preceding claims, **characterized in that** the connecting bar (32, 74) has a cross-sectional contour differing from the circular shape.

15. Wiper blade according to one of the preceding claims, **characterized in that** the guide surfaces (44) on the connecting bar (32, 74) or the guide surfaces (46, 80) on the clip (30, 78) have spring elements with which they bear against the respectively other guide surfaces (44, 46, 80) (Figs 9 and 10).

16. Wiper blade according to one of the preceding claims, **characterized in that** the gripping pin (68) is of spherical design in the longitudinal direction and runs in a corresponding guide groove (70) of the clip (30) (Fig. 5).

17. Wiper blade according to Claim 16, **characterized in that** the intercepting pin (68) is mounted on bearing pins (72) on the connecting bars (32).

## Revendications

1. Balai d'essuie-glace (20) comprenant un support de lame d'essuyage (22) ainsi qu'une lame d'essuyage (24), et guidé latéralement par rapport à un bras d'essuyage (10) par une installation (28) comportant une bielle (32, 74), dans lequel
une extrémité de la bielle (32, 74) est reliée de manière pivotante à une pièce d'articulation (12) du bras d'essuie-glace (10), sensiblement perpendiculairement au pare-brise (26), et la bielle (32, 74) s'applique contre une partie du balai d'essuie-glace (20) par des surfaces de guidage latérales,
**caractérisé en ce qu'**
un palier de pivotement (86, 88) est prévu aux deux extrémités du bras (32, 74), et l'un de ces paliers autorise un mouvement dans la direction longitudinale du bras d'essuie-glace (10) ou du balai d'essuie-glace (20).

2. Balai d'essuie-glace selon la revendication 1,
**caractérisé en ce qu'**
au moins un pivot d'accrochage (42), solidaire de la bielle (32, 74), forme le palier de pivotement (88) du côté du balai d'essuie-glace (20), le pivot d'accrochage (42) étant logé dans une pièce d'accrochage (30, 78) portée par le balai d'essuie-glace (20) dans une rainure d'accrochage (48) dirigée dans la direction longitudinale du balai d'essuie-glace (20).

3. Balai d'essuie-glace selon la revendication 2,
**caractérisé en ce que**
la pièce d'accrochage (30, 78) est un capuchon d'extrémité.

4. Balai d'essuie-glace selon l'une des revendications 2 ou 3,
**caractérisé en ce qu'**
un crochet d'enclipsage élastique (50) maintient le pivot d'accrochage (42) dans une rainure d'accrochage (48) ouverte en direction d'un goujon d'articulation (18).

5. Balai d'essuie-glace selon l'une des revendications précédentes,
**caractérisé en ce que**
le palier de pivotement (86) est formé par un axe de rotation (34) du côté du bras d'essuie-glace (10), cet axe étant logé dans des perçages de palier ou des cavités de la pièce d'articulation (12) ou dans un adaptateur (52, 62) relié à celui-ci en étant guidé par des surfaces de guidage (36), latérales.

6. Balai d'essuie-glace selon l'une des revendications 1 à 4,
**caractérisé en ce que**
le palier de pivotement (86) est formé du côté du bras d'essuie-glace (10) par un axe de rotation (34) relié solidairement au bras d'essuie-glace (10) et portant à rotation une pièce formant moyeu (40) solidaire de la bielle (32, 74) en étant guidé par les surfaces de guidage latérales (36).

7. Balai d'essuie-glace selon l'une des revendications 5 à 6,
**caractérisé en ce que**
l'adaptateur (62) se compose de deux pièces d'adaptateur (52) opposées l'une à l'autre, fixées sur les surfaces intérieures des flancs de la pièce d'articulation (12) et ayant chacune une rainure en forme de coin (58) ouverte en direction du pare-brise avec à l'extrémité, un perçage (60) formant palier dans lequel est enclipsé l'axe de rotation (34) (figure 3).

8. Balai d'essuie-glace selon la revendication 7,
**caractérisé en ce que**
les pièces d'adaptateur (52) sont reliées par des éléments de ressort (64) dont les faces extérieures comportent des tétons (66) s'accrochant dans des cavités ou dégagements correspondants de la pièce d'articulation.

9. Balai d'essuie-glace selon l'une quelconque des revendications précédentes,
**caractérisé en ce que**
les surfaces de guidage (44, 46) sont prévues sur la bielle (32, 74) ou sur la pièce d'accrochage (30, 78) entre les paliers de pivotement (86, 88).

10. Balai d'essuie-glace selon l'une quelconque des revendications 2 à 9,
**caractérisé par**
deux bielles (32) parallèles, dont les côtés tournés l'un vers l'autre ont des surfaces de guidage (44) s'appliquant contre les surfaces de guidage latérales (46) de la pièce d'accrochage (30) (figure 2).

11. Balai d'essuie-glace selon l'une quelconque des revendications 2 à 9,
**caractérisé par**
une bielle (32) guidée dans une fente de guidage (80) de la pièce d'accrochage (78).

12. Balai d'essuie-glace selon l'une quelconque des revendications 2 à 11
**caractérisé en ce que**
les bras (32, 74) sont appuyés réciproquement ou contre la partie de moyeu (40) ou l'axe de rotation (34) par une pièce de liaison (38) ou un gousset (76).

13. Balai d'essuie-glace selon l'une quelconque des revendications précédentes,
**caractérisé en ce que**
la bielle (32, 74) a un profil de section annulaire.

14. Balai d'essuie-glace selon l'une quelconque des revendications précédentes,
**caractérisé en ce que**
la bielle (32, 74) a un contour de section différent d'une forme circulaire.

15. Balai d'essuie-glace selon l'une quelconque des revendications précédentes,
**caractérisé en ce que**
les surfaces de guidage (44) du bras (32, 74) ou les surfaces de guidage (46, 80) de la pièce d'accrochage (30, 78) comportent des éléments élastiques par lesquels elles s'appuient contre les autres surfaces de guidage respectives (44, 46, 80) (figures 9 et 10).

16. Balai d'essuie-glace selon l'une quelconque des revendications précédentes,
**caractérisé en ce que**
le pivot d'accrochage (68) a dans sa direction longitudinale une forme bombée et vient dans une rainure de guidage correspondante (70) de la pièce d'accrochage (30) (figure 5).

17. Balai d'essuie-glace selon la revendication 16,
**caractérisé en ce que**
le pivot d'accrochage (68) est prévu sur les pivots de palier (72) des bielles (32).
